# EUROPEAN PATENT APPLICATION

(11) **EP 4 772 424 A1**
(43) Date of publication of application: **08.07.2026**
(21) Application number: 24865070.7
(22) Date of filing: 19.07.2024
(51) Int. Cl.: B62D 65/18, B23P 19/00, B23P 21/00, G05B 19/418

(54) **SYSTEM AND DEVICE**

(30) Priority: 15.09.2023 JP 2023150359
(71) Applicant: TOYOTA JIDOSHA KABUSHIKI KAISHA, Toyota-Shi, Aichi-Ken 471-8571 (JP)
(72) Inventor: IWAHORI, Kento, Toyota-shi, Aichi 471-8571 (JP); YOKOYAMA, Daiki, Toyota-shi, Aichi 471-8571 (JP); KATOU, Jyunya, Toyota-shi, Aichi 471-0856 (JP)
(74) Representative: D Young & Co LLP
(86) International application number: PCT/JP2024/025986
(87) International publication number: WO 2025/057563

(57) **Abstract**

A system, the system includes: a work device that is used for work on a vehicle under manufacture that can run by unmanned driving; an acquisition unit that acquires operation information related to an operation of the vehicle that runs by the unmanned driving to a work place at which the work device is disposed; and a control unit that controls the work device according to the operation information.

## Description

### CROSS REFERENCE TO RELATED APPLICATIONS

This application is based upon and claims benefit of priority from Japanese Patent Application No. 2023-150359 filed on September 15, 2023, the entire contents of which are incorporated herein by reference.

### FIELD

The present disclosure relates to a system and a device.

### BACKGROUND ART

There is known a technique of causing a vehicle to run by unmanned driving in a vehicle manufacturing process (e.g., Patent Literature 1).

### CITATION LIST

### PATENT LITERATURE

Patent Literature 1: Japanese Patent Application Publication (Translation of PCT Application) No. 2017-538619

### SUMMARY

When a moving object is moved by unmanned driving without conveying the moving object by a conveyor or the like in a process of manufacturing the moving object such as a vehicle, there is a room for devise for enhancing workability of work of assembling parts to the moving object.

The present disclosure can be implemented as following aspects.
(1) A first aspect according to the present disclosure provides a system. This system reflects operation information related to the operation of at least one of a work device used for work on a moving object that can move by unmanned driving, and the moving object that moves by unmanned driving to a work place at which the work device is disposed, in the control of the other.

The system according to this aspect can cause the moving object and the work device to work together, so that it is possible to enhance work efficiency of work on the moving object that uses the work device.

(2) The system according to the above aspect may include: an acquisition unit that acquires the operation information related to an operation of the moving object; and a control unit that controls the work device according to the operation information.

The system according to this aspect can cause the work device to operate according to the operation of the moving object, so that it is possible to enhance work efficiency of work on the moving object that uses the work device.

(3) The system according to the above aspect may include: an acquisition unit that acquires the operation information related to an operation of the work device; and a control unit that controls the moving object according to the operation information.

The system according to this aspect can cause the moving object to operate according to the operation of the work device, so that it is possible to enhance work efficiency of work on the moving object that uses the work device.

(4) A second aspect according to the present disclosure provides a device. This device includes: an acquisition unit that acquires operation information related to an operation of a moving object that is moving by unmanned driving; a generation unit that generates work device control information according to the operation information, the work device control information being used to control a work device that assembles a part to the moving object that is moving; and a transmission unit that transmits the work device control information to the work device.

The device according to this aspect can cause the work device to operate according to the operation of the moving object, so that the work device can appropriately assemble parts to the moving object. Accordingly, it is possible to enhance work efficiency of work of assembling the parts to the moving object.

(5) In the device according to the above aspect, the work device may include an arm unit that grips the part, and a control unit that controls the arm unit, the generation unit may generate the work device control information including a parameter used to control the arm unit, and the control unit may control the arm unit using the parameter.

The device according to this aspect can cause the arm unit to operate by transmitting the work device control information to the work device.

(6) In the device according to the above aspect, the generation unit may further generate moving object control information used to control the moving object.

The device according to this aspect can generate the moving object control information and the work device control information using one device.

(7) In the device according to the above aspect, if an operation of the moving object satisfies a predetermined condition, the generation unit may generate at least one of a command to cause the moving object to stop, a command to cause the work device to stop, and a command to broadcast that an abnormality has occurred.

The device according to this aspect can appropriately handle an abnormality if the abnormality may have occurred in an operation of the moving object.

(8) A second aspect according to the present disclosure provides a device that assembles a part to a moving object that can move by unmanned driving. This device includes: an arm unit that grips the part; a sensor that detects an operation of the moving object that is moving; and a control unit that controls the arm unit according to a detection result of the sensor.

The device according to this aspect can appropriately assemble parts to the moving object that is moving. Accordingly, it is possible to enhance work efficiency of work of assembling the parts to the moving object.

(9) A third aspect according to the present disclosure provides a device that assembles a part to a moving object that can move by unmanned driving. This device includes: an arm unit that grips the part; an acquisition unit that acquires a detection result of a sensor from the sensor that is mounted on the moving object and detects an operation of the moving object that is moving by the unmanned driving; and a control unit that controls the arm unit according to the detection result.

The device according to this aspect can appropriately assemble parts to the moving object that is moving. Accordingly, it is possible to enhance work efficiency of work of assembling the parts to the moving object.

(10) A fourth aspect according to the present disclosure provides a device. This device includes: an acquisition unit that acquires operation information related to an operation of a work device that assembles a part to a moving object that is moving by unmanned driving; a generation unit that generates moving object control information used to control the moving object according to the operation information; and a transmission unit that transmits the moving object control information to the moving object.

The device according to this aspect can cause the moving object to operate according to the operation of the work device, so that the work device can appropriately assemble parts to the moving object that is moving. Accordingly, it is possible to enhance work efficiency of work of assembling the parts to the moving object.

(11) In the device according to the above aspect, the generation unit may generate the moving object control information for controlling the moving object such that a relative speed of the moving object and the part at a time at which the part is assembled to the moving object falls within a predetermined range.

The device according to this aspect can reduce an impact at a time at which the parts are assembled to the moving object.

(12) In the device according to the above aspect, if the relative speed at the time at which the part is assembled to the moving object is not within the range, the generation unit may generate at least one of a command to cause the moving object to stop, a command to cause the work device to stop, and a command to broadcast that an abnormality has occurred.

The device according to this aspect can appropriately handle a part assembly failure if the part assembly failure may occur.

(13) A fifth aspect according to the present disclosure provides a device that is mounted on a moving object. This device includes: an acquisition unit that acquires operation information related to an operation of a work device that assembles a part to a moving object that is moving; and a control unit that controls the moving object according to the operation information.

The device according to this aspect can cause the moving object to operate according to the operation of the work device, so that the work device can appropriately assemble parts to the moving object that is moving. Accordingly, it is possible to enhance work efficiency of work of assembling the parts to the moving object.

(14) A sixth aspect according to the present disclosure provides a device. This device includes: an acquisition unit that acquires operation information related to an operation of a moving object that can move by unmanned driving; and a generation unit that generates work device control information according to the operation information, the work device control information being used to control a work device that assembles a part to the moving object that is stopping at a work place by unmanned driving.

The device according to this aspect can cause the work device to operate according to the operation of the moving object, so that the work device can appropriately assemble parts to the stopping moving object. Accordingly, it is possible to enhance work efficiency of work of assembling the parts to the moving object.

(15) A seventh aspect according to the present disclosure provides a device. This device includes: an acquisition unit that acquires operation information related to an operation of a work device that assembles a part to a moving object that can move by unmanned driving, and assembles the part to the moving object that is stopping at a work place by unmanned driving; and a generation unit that generates moving object control information used for control of causing the moving object to stop at the work place according to the operation information.

The device according to this aspect can cause the moving object to operate according to the operation of the work device, so that the work device can appropriately assemble parts to the stopping moving object. Accordingly, it is possible to enhance work efficiency of work of assembling the parts to the moving object.

(16) An eighth aspect according to the present disclosure provides a device. This device includes: an acquisition unit that acquires operation information related to an operation of a moving object that can move by unmanned driving; a generation unit that generates work device control information according to the operation information, the work device control information being used to control a work device that can move by unmanned driving and on which at least one of a part to be assembled to the moving object and a tool to be used for work on the moving object can be loaded; and a transmission unit that transmits the work device control information to the work device.

The device according to this aspect can cause the work device to move according to an operation of a work target moving object. Consequently, it is possible to enhance work efficiency of a worker who takes out parts and tools from the work device, and works on the moving object.

(17) In the device according to the above aspect, the generation unit may generate the work device control information such that a relative speed of the work device and the moving object falls within a predetermined range.

The device according to this aspect can suppress change of a distance between the work device and the moving object. Consequently, it is possible to effectively enhance work efficiency of the worker.

(18) In the device according to the above aspect, when determining that the work on the moving object has ended, the generation unit may generate the work device control information for causing the moving object to come close to a following moving object on which work is performed after the moving object.

The device according to this aspect can eliminate worker's labor of manually bringing the work device close to the following moving object. Consequently, it is possible to effectively enhance work efficiency of the worker.

(19) In the device according to the above aspect, the acquisition unit may acquire operation information related to an operation of the following moving object while the work device is coming close to the following moving object or after the work device comes close at a predetermined distance or less to the following moving object, and the generation unit may generate the work device control information according to the operation information of the following moving object.

The device according to this aspect can acquire an operation of the moving object at an appropriate timing.

(20) In the device according to the above aspect, when determining that the work on the moving object has ended, and determining that there is not the following moving object, the generation unit may generate the work device control information for causing the moving object to stop.

The device according to this aspect can suppress wasteful consumption of energy caused when the work device continues moving even though there is no following moving object.

(21) A ninth aspect according to the present disclosure provides a work device that can move by unmanned driving. This work device includes: a loading platform on which at least one of a part to be assembled to a moving object that can move by unmanned driving and a tool to be used for work on the moving object can be loaded; a driving device for performing movement; an acquisition unit that acquires a detection result of a sensor mounted on the moving object; and a control unit that controls the driving device according to the detection result.

The work device according to this aspect can cause the work device to move according to an operation of a work target moving object. Consequently, it is possible to enhance work efficiency of the worker who takes out parts and tools from the work device, and works on the moving object.

(22) A tenth aspect according to the present disclosure provides a work device that can move by unmanned driving. This work device includes: a loading platform on which at least one of a part to be assembled to a moving object that can move by unmanned driving and a tool to be used for work on the moving object can be loaded; a driving device for performing movement; a sensor that detects an operation of the moving object; and a control unit that controls the driving device according to a detection result of the sensor.

The work device according to this aspect can cause the work device to move according to an operation of a work target moving object. Consequently, it is possible to enhance work efficiency of the worker who takes out parts and tools from the work device, and works on the moving object.

The present disclosure can be also implemented by various aspects other than the system and the device. For example, the present disclosure can be implemented as, for example, aspects such as a method, a computer program, and a recording medium having the computer program recorded thereon.

### BRIEF DESCRIPTION OF DRAWINGS

Fig. 1 is an explanatory view illustrating a configuration of a system according to a first embodiment;
Fig. 2 is an explanatory view illustrating a configuration of a vehicle according to the first embodiment;
Fig. 3 is an explanatory view illustrating a configuration of a server device according to the first embodiment;
Fig. 4 is an explanatory view illustrating a configuration of an assembly robot according to the first embodiment;
Fig. 5 is an explanatory view illustrating that a vehicle runs by unmanned driving in a factory;
Fig. 6 is a flowchart illustrating a processing procedure of vehicle control according to the first embodiment;
Fig. 7 is a flowchart illustrating a processing procedure of assembly robot control according to the first embodiment;
Fig. 8 is a first explanatory view illustrating an operation of the assembly robot;
Fig. 9 is a second explanatory view illustrating the operation of the assembly robot;
Fig. 10 is a third explanatory view illustrating the operation of the assembly robot;
Fig. 11 is an explanatory view illustrating a configuration of the system according to a second embodiment;
Fig. 12 is an explanatory view illustrating a configuration of the assembly robot according to the second embodiment;
Fig. 13 is a flowchart illustrating a processing procedure of assembly robot control according to the second embodiment;
Fig. 14 is an explanatory view illustrating a configuration of the system according to a third embodiment;
Fig. 15 is an explanatory view illustrating a configuration of a vehicle according to the third embodiment;
Fig. 16 is an explanatory view illustrating a configuration of the assembly robot according to the third embodiment;
Fig. 17 is an explanatory view illustrating a configuration of the system according to a fourth embodiment;
Fig. 18 is an explanatory view illustrating a configuration of the system according to a fifth embodiment;
Fig. 19 is an explanatory view illustrating a configuration of the system according to a sixth embodiment;
Fig. 20 is an explanatory view illustrating a configuration of the system according to a seventh embodiment;
Fig. 21 is an explanatory view illustrating a configuration of a wagon according to the seventh embodiment;
Fig. 22 is a flowchart illustrating a processing procedure of wagon control according to the seventh embodiment;
Fig. 23 is an explanatory view illustrating an operation of the wagon;
Fig. 24 is an explanatory view illustrating a configuration of the system according to an eighth embodiment;
Fig. 25 is an explanatory view illustrating a configuration of the wagon according to the eighth embodiment;
Fig. 26 is an explanatory view illustrating a configuration of the system according to a ninth embodiment;
Fig. 27 is an explanatory view illustrating a configuration of the wagon according to the ninth embodiment; and
Fig. 28 is a flowchart illustrating a processing procedure of vehicle control according to another embodiment.

### DETAILED DESCRIPTION

### A. First Embodiment:

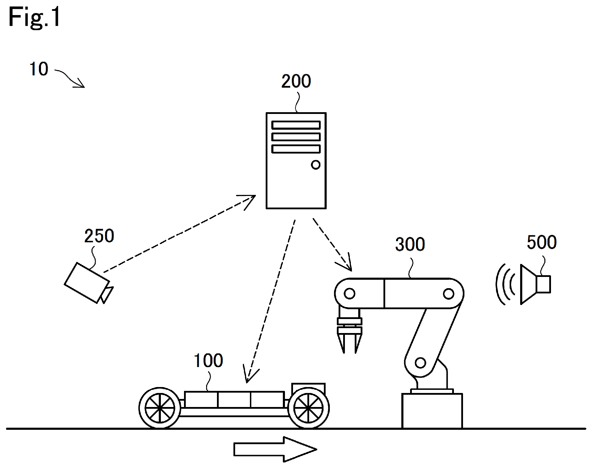

Fig. 1 is an explanatory view illustrating a configuration of a system 10 according to the first embodiment. The system 10 is used in, for example, a factory that manufactures a vehicle 100. In the present embodiment, the vehicle 100 is a Battery Electric Vehicle (BEV). Note that the vehicle 100 is not limited to an electric vehicle, and may be, for example, a gasoline car, a hybrid car, and a fuel cell car.

The system 10 includes the vehicle 100, a server device 200, at least one external sensor 250, an assembly robot 300, and a broadcasting device 500. The vehicle 100 is configured to be able to run by unmanned driving. The vehicle 100 is in a state in the middle of manufacturing, and the assembly robot 300 executes part assembly work with respect to the vehicle 100 that is running by unmanned driving. In the present embodiment, the vehicle 100 runs by unmanned driving in a form of a so-called platform. Note that the vehicle 100 will be also referred to as a moving object, and the assembly robot 300 will be also referred to as a work device.

In the present disclosure, "unmanned driving" means driving that does not depend on a driving operation of a passenger who is in the vehicle 100. The "driving operation" means an operation related to at least one of "run", "turn", and "stop" of the vehicle 100. Unmanned driving is implemented by automatic or manual remote control that uses a device located outside the vehicle 100, or autonomous control of the vehicle 100. A passenger who does not perform the driving operation may be in the vehicle 100 that is running by unmanned driving. Examples of the passenger who does not perform the driving operation include a person who is simply sitting on a driver's seat of the vehicle 100 or a person who is taking a different behavior from the driving operation. Examples of the different behavior from the driving operation include work of assembling a part to the vehicle 100, inspection of the vehicle 100, an operation on switches provided to the vehicle 100, and the like. Note that driving performed by a driving operation of the passenger will be also referred to as "manned driving".

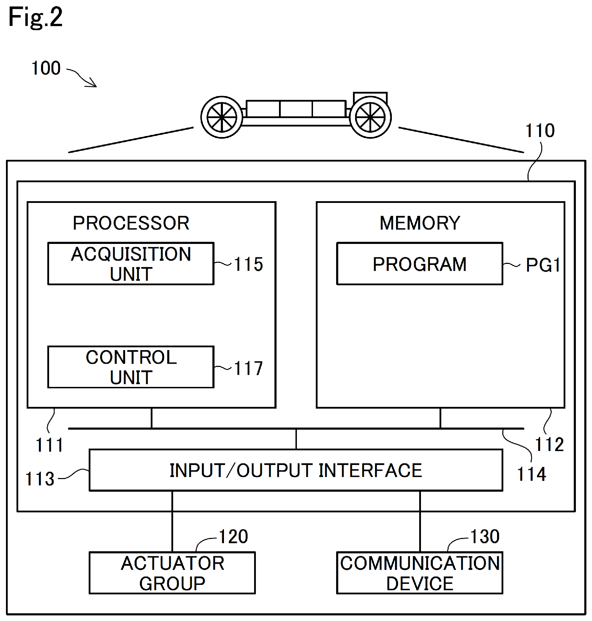

Fig. 2 is an explanatory view illustrating a configuration of the vehicle 100 according to the present embodiment. The vehicle 100 includes a vehicle control device 110 for controlling each unit of the vehicle 100, an actuator group 120 that includes at least one actuator that is driven under control of the vehicle control device 110, and a communication device 130 for communicating with the server device 200 by wireless communication. In the present embodiment, the actuator group 120 includes an actuator of a driving device for accelerating the vehicle 100, an actuator of a steering device for changing a traveling direction of the vehicle 100, and an actuator of a braking device for decelerating the vehicle 100. The driving device includes a battery, a running motor that drives with electrical power of the battery, and wheels to be rotated by the running motor. The actuator of the driving device includes the running motor.

The vehicle control device 110 is composed of a computer that includes a processor 111, a memory 112, an input/output interface 113, and an internal bus 114. The processor 111, the memory 112, and the input/output interface 113 are connected bidirectionally communicably via the internal bus 114. The input/output interface 113 is connected with the actuator group 120 and the communication device 130.

The processor 111 functions as an acquisition unit 115 and a control unit 117 by executing a computer program PG1 stored in advance in the memory 112. The acquisition unit 115 acquires vehicle control information for controlling the vehicle 100. In the present embodiment, the acquisition unit 115 acquires a running control signal as the vehicle control information from the server device 200. The running control signal includes an acceleration and a steering angle of the vehicle 100 as parameters. The running control signal may include the speed of the vehicle 100 instead of the acceleration of the vehicle 100. The control unit 117 controls the actuator group 120 using the running control signal. When the passenger is in the vehicle 100, the control unit 117 can cause the vehicle 100 to run by controlling the actuator group 120 in response to a passenger's driving operation. The control unit 117 can cause the vehicle 100 to run by controlling the actuator group 120 according to the running control signal received from the server device 200 irrespectively of whether or not the passenger is in the vehicle 100. Note that the vehicle control information will be also referred to as moving object control information.

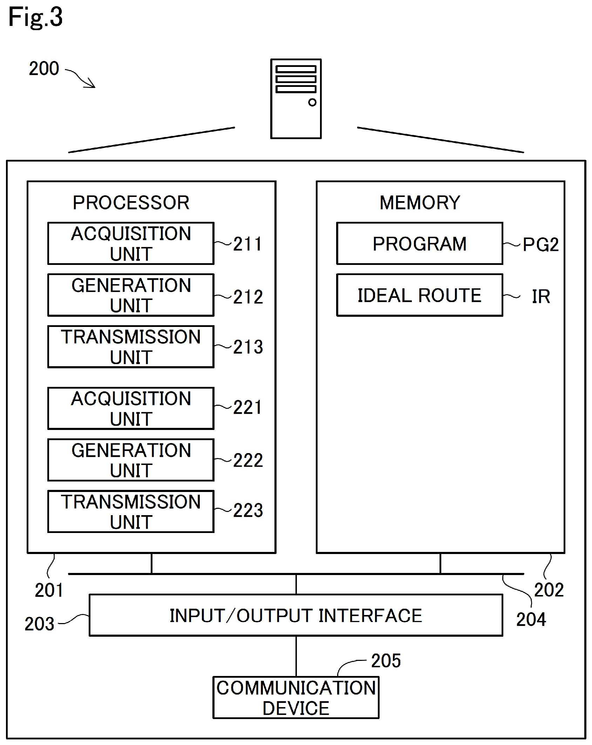

Fig. 3 is an explanatory view illustrating a configuration of the server device 200 according to the present embodiment. The server device 200 is composed of a computer that includes a processor 201, a memory 202, an input/output interface 203, and an internal bus 204. The processor 201, the memory 202, and the input/output interface 203 are connected bidirectionally communicably via the internal bus 204. The input/output interface 203 is connected with a communication device 205 for communicating with the vehicle 100 by wireless communication. In the present embodiment, the communication device 205 can communicate with the external sensors 250, the assembly robot 300, and the broadcasting device 500 by wired communication or wireless communication.

By executing a computer program PG2 stored in advance in the memory 202, the processor 201 functions as an acquisition unit 211 that acquires vehicle position information related to a position and an orientation of the vehicle 100, a generation unit 212 that generates vehicle control information used to control the vehicle 100, a transmission unit 213 that transmits the vehicle control information to the vehicle 100, an acquisition unit 221 that acquires vehicle operation information related to an operation of the vehicle 100, a generation unit 222 that generates work device control information used to control the assembly robot 300 that is a work device, and a transmission unit 223 that transmits the work device control information to the assembly robot 300. In the present embodiment, the acquisition unit 211 acquires the vehicle position information using detection results output from the external sensors 250. The vehicle position information includes information of the position and the orientation of the vehicle 100. The generation unit 212 generates the vehicle control information using the vehicle position information. The generation unit 212 generates a running control signal as the vehicle control information. The acquisition unit 221 acquires the vehicle operation information using the detection results output from the external sensors 250. In the present embodiment, the vehicle operation information includes information of the position, the orientation, and the speed of the vehicle 100. The generation unit 222 generates the work device control information using the vehicle operation information. In the present embodiment, the generation unit 222 generates as operation control information an operation control signal for causing the assembly robot 300 to operate. The generation unit 222 generates an operation control signal such that a part is assembled at a predetermined position of the running vehicle 100 and at a predetermined orientation, and a relative speed of the vehicle 100 and the part at a time of assembly in a direction parallel to a target assembly surface of the vehicle 100 becomes zero. In the following description, an operation of assembling a part at a predetermined position of the vehicle 100 and at a predetermined orientation, and making a relative speed of the vehicle 100 and the part at a time of assembly in the direction parallel to the target assembly surface of the vehicle 100 zero will be referred to as an ideal assembly operation.

The external sensor 250 is located outside the vehicle 100. The external sensor 250 is used to detect the position and the orientation of the vehicle 100. In the present embodiment, the external sensor 250 is a camera that is installed in the factory. The external sensor 250 includes an unillustrated communication device, and communicates with the server device 200 by wired communication or wireless communication. Note that the external sensor 250 is not limited to the camera, and may be, for example, a LiDAR.

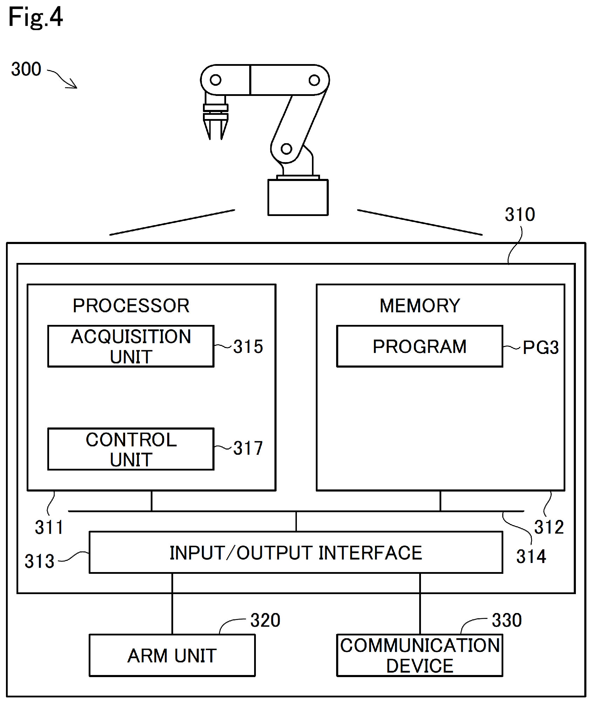

Fig. 4 is an explanatory view illustrating a configuration of the assembly robot 300 according to the present embodiment. The assembly robot 300 includes a control device 310, an arm unit 320, and a communication device 330. In the present embodiment, the control device 310 controls each unit of the assembly robot 300. The arm unit 320 is composed of a vertical articulated robot arm. An end effector for gripping a part is attached to a distal end part of the arm unit 320. In the present embodiment, the end effector is configured to pinch the part. The communication device 330 can communicate with the server device 200 by wired communication or wireless communication. Note that the arm unit 320 is not limited to the vertical articulated robot arm, and may be, for example, a horizontal articulated robot arm, an orthogonal robot arm, and a parallel link robot arm. The end effector may be configured to suction a part instead of pinching the part.

The control device 310 is composed of a computer that includes a processor 311, a memory 312, an input/output interface 313, and an internal bus 314. The processor 311, the memory 312, and the input/output interface 313 are connected bidirectionally communicably via the internal bus 314. The input/output interface 313 is connected with the arm unit 320 and the communication device 330.

In the present embodiment, the processor 311 functions as an acquisition unit 315 that acquires work device control information, and a control unit 317 that controls the arm unit 320 by executing a computer program PG3 stored in advance in the memory 312. In the present embodiment, the acquisition unit 315 acquires an operation control signal as the work device control information from the server device 200. The control unit 317 controls the arm unit 320 according to the operation control signal.

As illustrated in Fig. 1, the broadcasting device 500 is a device for broadcasting that an abnormality has occurred in the factory, to a manager of the system 10 or workers in the factory. In the following description, the manager of the system 10 or the workers in the factory will be referred to as a manager or the like. Examples of the broadcasting device 500 include a warning buzzer that is provided to the factory or a warning lamp that is provided to the factory. The broadcasting device 500 may be a tablet terminal that is carried by the manager or the like. The broadcasting device 500 includes an unillustrated communication device, and can communicate with the server device 200 by wired communication or wireless communication.

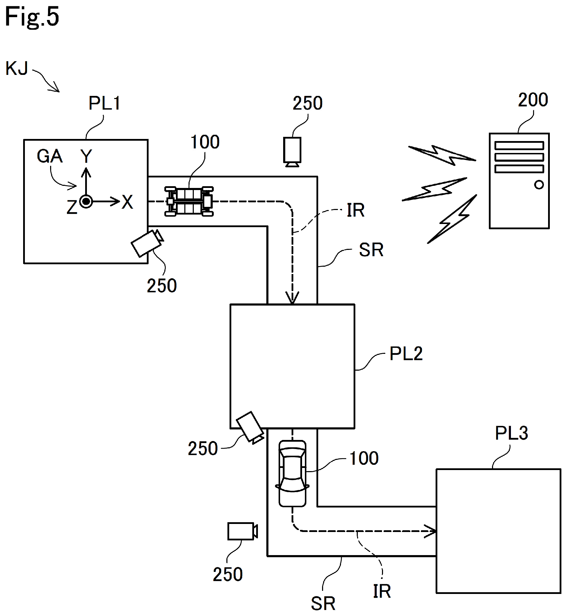

Fig. 5 is an explanatory view illustrating that the vehicle 100 runs by unmanned driving in a factory KJ. In the present embodiment, the factory KJ includes a first place PL1, a second place PL2, and a third place PL3. The first place PL1, the second place PL2, and the third place PL3 are connected by a track SR on which the vehicle 100 can run. In the factory KJ, a plurality of the external sensors 250 are installed along the track SR.

The first place PL1 is a place at which work of assembling the vehicle 100 is performed. The vehicle 100 assembled at the first place PL1 is in a state where the vehicle 100 can run by unmanned driving, in other words, a state where the vehicle 100 can exhibit three functions of "running", "turning", and "stopping" by unmanned driving. In the present embodiment, the vehicle 100 assembled at the first place PL1 adopts a form of a platform. The vehicle 100 moves from the first place PL1 to the second place PL2 by unmanned driving.

The second place PL2 is a place at which work of further assembling parts to the vehicle 100 is performed. The assembly robot 300 is disposed at the second place PL2. Examples of the parts to be assembled at the second place PL2 include vehicle body parts, interior parts such as seats, a headlamp, and wipers. In the present embodiment, the vehicle 100 to which the parts have been assembled at the second place PL2 adopts a form of a finished car. The vehicle 100 moves from the second place PL2 to the third place PL3 by unmanned driving.

The third place PL3 is a place at which work of inspecting the vehicle 100 is performed. The vehicle 100 having passed the inspection at the third place PL3 is shipped from the factory KJ. Note that the vehicle 100 to be shipped from the factory KJ may not be in a form of a finished car. That is, there may be unattached parts for the vehicle 100 to be shipped from the factory KJ. In this case, after the vehicle 100 is shipped from the factory KJ, the unattached parts may be attached to the vehicle 100.

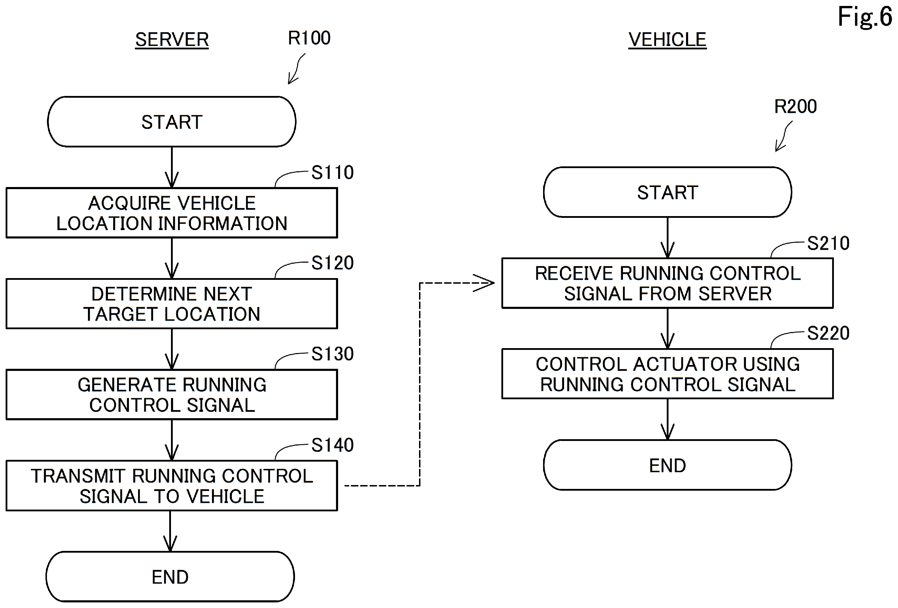

Fig. 6 is a flowchart illustrating a processing procedure of vehicle control according to the present embodiment. In the present embodiment, a two-dimensional code having an individual identification number of the vehicle 100 recorded therein is attached to the vehicle 100. When the worker in the factory KJ reads the two-dimensional code using a reading device, the individual identification number is transmitted from the reading device to the server device 200. When the server device 200 receives the individual identification number, vehicle control starts. The processor 201 of the server device 200 executes a first routine R100. The processor 111 of the vehicle 100 executes a second routine R200.

The first routine R100 includes step S110, step S120, step S130, and step S140. In step S110, the acquisition unit 211 acquires vehicle position information using detection results output from the external sensors 250. In the present embodiment, the vehicle position information includes the position and the orientation of the vehicle 100 in a global coordinate system GA in the factory KJ. In the present embodiment, the external sensor 250 is a camera that is installed in the factory KJ, and the external sensor 250 outputs an image as a detection result. The position and the orientation of the external sensor 250 are adjusted in advance. The acquisition unit 211 acquires the position and the orientation of the vehicle 100 in the factory KJ using the images acquired from the external sensors 250.

As for a method for acquiring the position of the vehicle 100, by, for example, detecting the outer shape of the vehicle 100 from the images, calculating coordinate systems of the images, that is, coordinates of a positioning point of the vehicle 100 in the local coordinate system of the factory KJ, and converting the calculated coordinates into coordinates in the global coordinate system GA, the acquisition unit 211 can acquire the position of the vehicle 100. The outer shape of the vehicle 100 included in the images can be detected by, for example, inputting the images to a detection model that utilizes artificial intelligence. Examples of the detection model include a trained machine learning model that has been trained to implement one of semantic segmentation and instance segmentation. As this machine learning model, for example, a Convolutional Neural Network (hereinafter, a CNN) that has been trained by supervised learning that uses a learning data set can be used. The learning data set includes, for example, a plurality of training images including the vehicle 100, and a correct answer label indicating which one of an area indicating the vehicle 100 and an area indicating other than the vehicle 100 each area in each training image is. At a time of training of the CNN, parameters of the CNN are preferably updated by backpropagation so as to reduce an error of an output result of the detection model and the correct answer label. As for a method for acquiring the orientation of the vehicle 100, by calculating a movement vector of the vehicle 100 from a change of a position of a feature point of the vehicle 100 between image frames using, for example, an optical flow method, and estimating the orientation of the vehicle 100 based on an orientation of the movement vector, the acquisition unit 211 can acquire the orientation of the vehicle 100.

In step S120, the generation unit 212 determines a target location toward which the vehicle 100 needs to travel next. In the present embodiment, the target location is indicated by X, Y, and Z coordinates in the global coordinate system GA. The server device 200 stores in advance an ideal route IR through which the vehicle 100 needs to run. The ideal route IR is represented by a node indicating a place of departure, a node indicating a passing point, a node indicating a destination, and a link connecting the respective nodes. The generation unit 212 determines the target location toward which the vehicle 100 needs to travel next using the position information and the ideal route IR of the vehicle 100. The generation unit 212 determines the target location on the ideal route IR that is ahead of a current position of the vehicle 100.

In step S130, the generation unit 212 generates a running control signal for causing the vehicle 100 to run toward the determined target location. In the present embodiment, the running control signal includes an acceleration and a steering angle of the vehicle 100 as parameters. The generation unit 212 calculates a current running speed of the vehicle 100 from a transition of the position of the vehicle 100, and compares the calculated running speed and a predetermined target speed of the vehicle 100. The generation unit 212 determines the acceleration so as to accelerate the vehicle 100 when the running speed is lower than the target speed, and determines an acceleration so as to decelerate the vehicle 100 when the running speed is higher than the target speed. The generation unit 212 determines the steering angle such that the vehicle 100 does not deviate from the ideal route IR when the vehicle 100 is located on the ideal route IR, and determines the steering angle such that the vehicle 100 comes back to the ideal route IR when the vehicle 100 is not located on the ideal route IR, in other words, when the vehicle 100 deviates from the ideal route IR.

In step S140, the transmission unit 213 transmits the running control signal to the vehicle 100. The processor 201 repeats the first routine R100 including acquisition of the position information of the vehicle 100, determination of the target location, generation of the running control signal, and transmission of the running control signal at a predetermined cycle.

The processor 111 of the vehicle 100 executes the second routine R200 while the first routine R100 is executed. The second routine R200 includes step S210 and step S220. In step S210, the acquisition unit 115 receives the running control signal from the server device 200. In step S220, the control unit 117 causes the vehicle 100 to run at the acceleration and the steering angle included in the running control signal by controlling the actuator group 120 using the received running control signal. The processor 111 repeats the second routine R200 including reception of the running control signal and control of the actuator group 120 at a predetermined cycle. The system 10 according to the present embodiment can cause the vehicle 100 to run by remote control, so that it is possible to move the vehicle 100 without using a conveyance facility such as a crane or a conveyor.

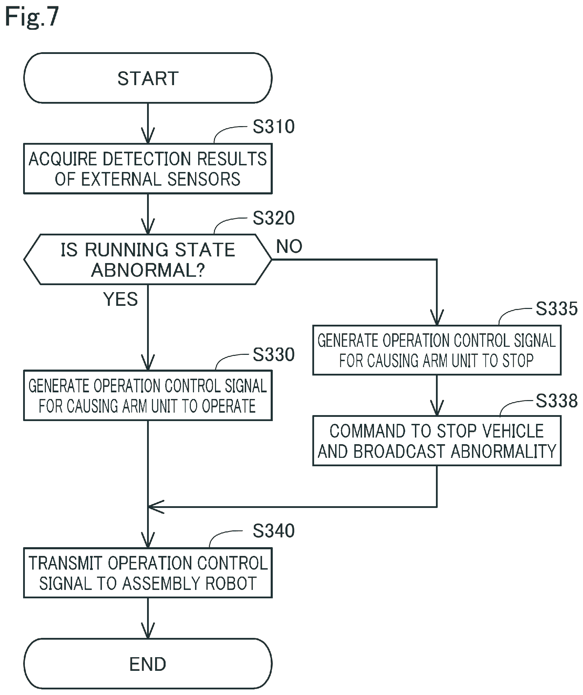

Fig. 7 is a flowchart illustrating a processing procedure of assembly robot control. This processing is executed by the processor 201 of the server device 200. In step S310, the acquisition unit 221 acquires detection results output from the external sensors 250, and acquires vehicle operation information using the detection results of the external sensors 250. In the present embodiment, the acquisition unit 221 acquires the position, the orientation, and the speed of the running vehicle 100 as the vehicle operation information.

In step S320, the generation unit 222 determines whether or not a running state of the vehicle 100 is abnormal. In the present embodiment, the generation unit 222 determines that the running state is abnormal when at least one of the position, the orientation, and the speed of the vehicle 100 is outside a predetermined range.

If it is not determined in step S320 that the running state is abnormal, the generation unit 222 generates an operation control signal for causing the arm unit 320 to operate according to the vehicle operation information in step S330. The generation unit 222 generates the operation control signal such that parts are assembled to the running vehicle 100 by an ideal assembly operation.

If it is determined in step S320 that the running state is abnormal, the generation unit 222 generates an operation control signal for causing the arm unit 320 to stop in step S335, and the generation unit 222 generates a running control signal for causing the vehicle 100 to stop and transmits the running control signal to the vehicle 100 in step S338, and generates a broadcast control signal for causing the broadcasting device 500 to broadcast occurrence of the abnormality and transmits the broadcast control signal to the broadcasting device 500.

After step S330 or step S338, the transmission unit 213 transmits the operation control signal to the assembly robot 300. The processor 201 repeats this processing at a predetermined cycle.

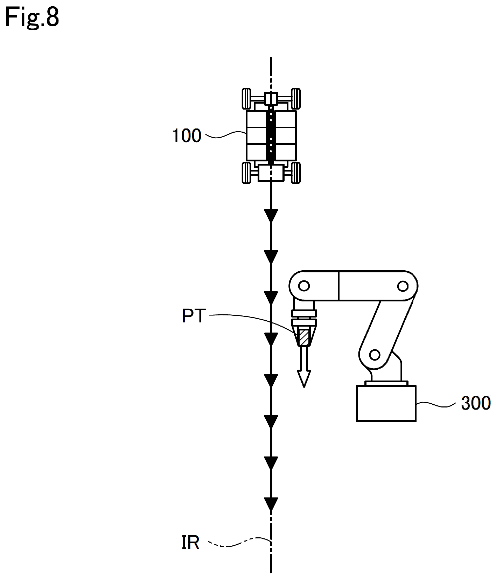

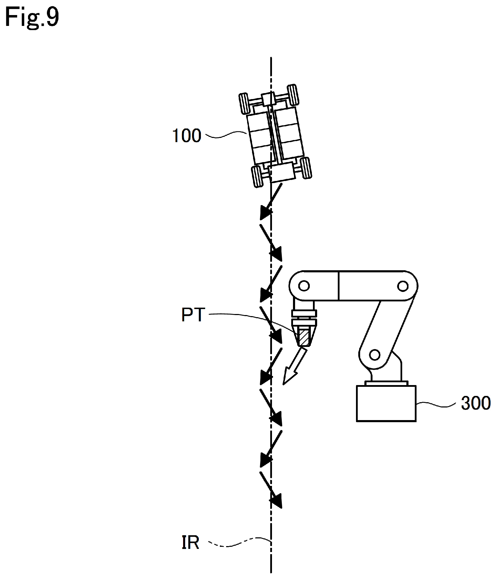

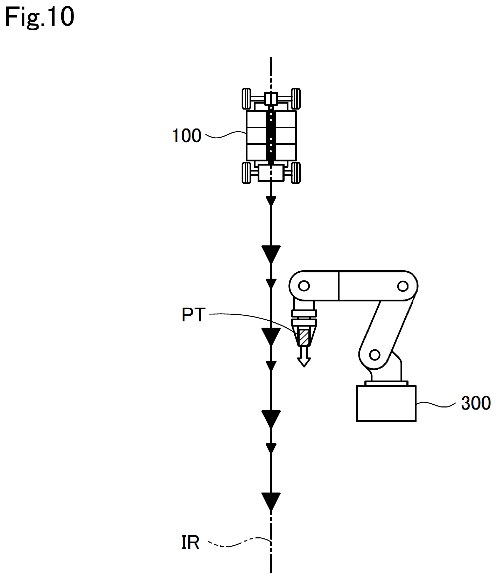

Fig. 8 is a first explanatory view schematically illustrating an operation of the assembly robot 300. Fig. 9 is a second explanatory view schematically illustrating the operation of the assembly robot 300. Fig. 10 is a third explanatory view schematically illustrating the operation of the assembly robot 300. In Figs. 8 to 10, speed vectors of the vehicle 100 are indicated by arrows, and speed vectors of a part PT gripped by the assembly robot 300 are indicated by open arrows. When the vehicle 100 runs in an ideal running state on the ideal route IR as illustrated in Fig. 8, the assembly robot 300 can appropriately assemble the part PT to the running vehicle 100 by, for example, an operation taught in advance. However, in a case of the vehicle 100 in the middle of manufacturing, the running state of the vehicle 100 is likely to become unstable as illustrated in Figs. 9 and 10. When the running state of the vehicle 100 becomes unstable, it is difficult to appropriately assemble a part to the running vehicle 100, and therefore it is more likely that workability of assembly work lowers and an assembly failure occurs.

When, for example, wheel alignment of the vehicle 100 is misaligned as illustrated in Fig. 9, the vehicle 100 cannot run straightforward, and the position of the vehicle 100 shifts to the left and the right from the ideal route IR. In this case, the steering angle is repeatedly changed to try to cause the vehicle 100 to come back to the ideal route IR, and the position and the orientation of the vehicle 100 periodically change. Hence, a position and an orientation of the part PT with respect to the vehicle 100 may shift to the left and the right, and the relative speed of the vehicle 100 and the part PT may become high.

When, for example, a resistance against running of the vehicle 100 is great as illustrated in Fig. 10, the speed of the vehicle 100 is likely to lower. In this case, application of the acceleration is repeated changed to try to recover the speed of the vehicle 100, and the speed of the vehicle 100 periodically changes. Hence, the position of the part PT with respect to the vehicle 100 may shift to the front and the back, and the relative speed of the vehicle 100 and the part PT may become high. Due to a combination of a phenomenon illustrated in Fig. 9 and a phenomenon illustrated in Fig. 10, the running state of the vehicle 100 may also become unstable.

As for such a problem, the operation of the assembly robot 300 is determined according to the running state of the vehicle 100 in the present embodiment, so that, even when the running state of the vehicle 100 becomes unstable, it is possible to suppress the position and the orientation of the part PT from shifting from the vehicle 100 and suppress the relative speed of the vehicle 100 and the part PT from becoming high.

### The above-described system 10 according to the present embodiment determines the operation of the assembly robot 300 according to the running state of the vehicle 100, so that, even when the running state of the vehicle 100 becomes unstable, the assembly robot 300 can appropriately assemble the part PT to the running vehicle 100. Accordingly, it is possible to appropriately assemble the part PT to the vehicle 100 without causing the vehicle 100 to stop, and enhance work efficiency of work of assembling the part PT.

Furthermore, in the present embodiment, the server device 200 generates the work device control information including parameters used to control the arm unit 320, and transmits the work device control information to the assembly robot 300. The assembly robot 300 controls the arm unit 320 using the parameters included in the work device control information. Consequently, by transmitting the work device control information from the server device 200 to the assembly robot 300, it is possible to cause the assembly robot 300 to execute an operation according to the running state of the vehicle 100.

Furthermore, in the present embodiment, the server device 200 further generates the vehicle control information used to control the vehicle 100, and transmits the vehicle control information to the vehicle 100. Consequently, the server device 200 can cause the vehicle 100 and the assembly robot 300 to work together.

Furthermore, in the present embodiment, when determining that the running state of the vehicle 100 is abnormal, the server device 200 causes the vehicle 100 and the assembly robot 300 to stop. Consequently, when the running state of the vehicle 100 is abnormal, it is possible to stop assembling the part PT to the vehicle 100. Furthermore, in the present embodiment, when determining that the running state of the vehicle 100 is abnormal, the server device 200 causes the broadcasting device 500 to broadcast that the abnormality has occurred to the manager or the like. Consequently, it is possible to make the manager or the like recognize the occurrence of abnormality earlier.

### B. Second Embodiment:

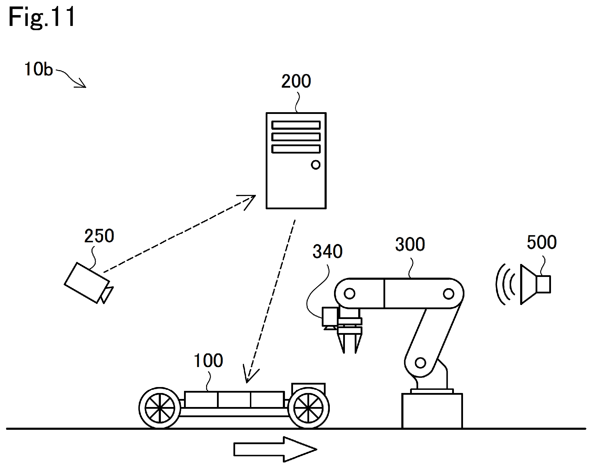

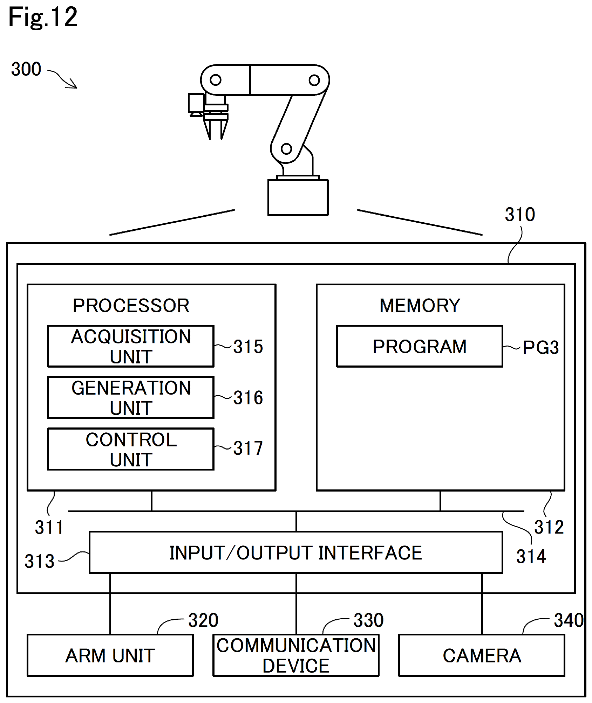

Fig. 11 is an explanatory view illustrating a configuration of a system 10b according to the second embodiment. Fig. 12 is an explanatory view illustrating a configuration of the assembly robot 300 according to the second embodiment. The present embodiment differs from the first embodiment in that the assembly robot 300 includes a camera 340, and the assembly robot 300 generates vehicle operation information using a detection result of the camera 340. The other configurations are the same as those in the first embodiment unless described in particular.

As illustrated in Fig. 12, the assembly robot 300 includes the camera 340 for detecting an operation of the vehicle 100 in the present embodiment. The camera 340 is fixed to a distal end part of the arm unit 320. The camera 340 moves when the arm unit 320 operates. Note that the camera 340 may be fixed to a base part of the arm unit 320. In this case, the camera 340 does not move even when the arm unit 320 operates. The assembly robot 300 may include a LiDAR instead of the camera 340. The camera and the LiDAR for detecting the operation of the vehicle 100 will be referred to as sensors.

In the present embodiment, the processor 311 functions as the acquisition unit 315 that acquires vehicle operation information, a generation unit 316 that generates an operation control signal for controlling the arm unit 320, and the control unit 317 that controls the arm unit 320 by executing the computer program PG3 stored in advance in the memory 312. Note that, since the assembly robot 300 generates an operation control signal by itself in the present embodiment, the server device 200 may not be provided with the acquisition unit 221, the generation unit 222, and the transmission unit 223 illustrated in Fig. 3.

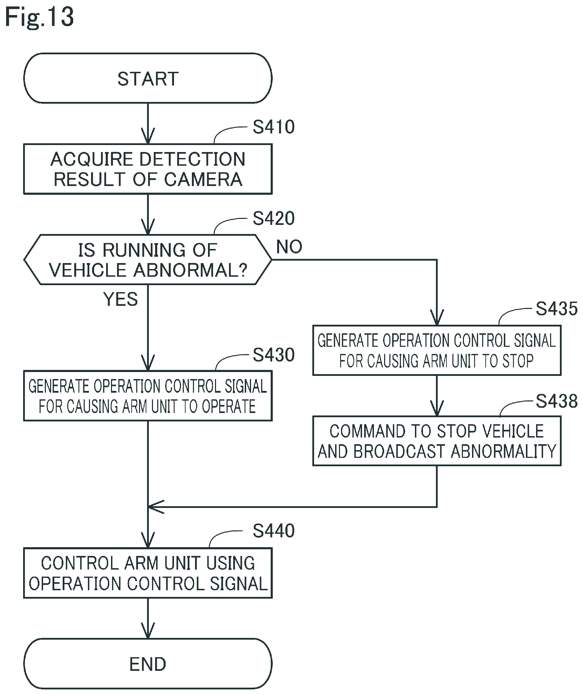

Fig. 13 is a flowchart illustrating a processing procedure of assembly robot control according to the second embodiment. This processing is executed by the processor 311 of the assembly robot 300. In step S410, the acquisition unit 315 acquires vehicle operation information using a detection result output from the camera 340. In the present embodiment, the vehicle operation information includes the position, the orientation, and the speed of the vehicle 100 in the global coordinate system GA. The position, the orientation, and the speed of the vehicle 100 in a local coordinate system for which the camera 340 serves as the reference are obtained from the detection result of the camera 340. The acquisition unit 315 can acquire the position and the orientation of the camera 340 in the global coordinate system GA from, for example, the position and the orientation at which the assembly robot 300 in the factory KJ is installed and information of an encoder built in the arm unit 320 in addition to the detection result of the camera 340. Consequently, the acquisition unit 315 can convert the position, the orientation, and the speed of the vehicle 100 in the local coordinate system for which the camera 340 serves as the reference into the position, the orientation, and the speed of the vehicle 100 in the global coordinate system GA.

In step S420, the generation unit 316 determines whether or not the running state of the vehicle 100 is abnormal. In the present embodiment, the generation unit 316 determines that the running state is abnormal when at least one of the position, the orientation, and the speed of the vehicle 100 is outside the predetermined range.

If it is not determined in step S420 that the running state is abnormal, the generation unit 316 generates an operation control signal for causing the arm unit 320 to operate according to the vehicle operation information in step S430. The generation unit 316 generates the operation control signal such that parts are assembled to the running vehicle 100 by an ideal assembly operation. The generation unit 316 can generate the operation control signal by, for example, correcting the operation control signal generated in advance by teaching according to the vehicle operation information. Note that the vehicle operation information may include a relative position, a relative orientation, and a relative speed of the distal end part of the arm unit 320 and the vehicle 100 instead of the position, the orientation, and the speed of the vehicle 100 in the global coordinate system GA. Even in this case, the generation unit 316 can generate the operation control signal for the running vehicle 100. Consequently, a positional relationship between the camera 340 and the distal end part of the arm unit 320 is known, so that the acquisition unit 315 can acquire the relative position, the relative orientation, and the relative speed of the distal end part of the arm unit 320 and the vehicle 100 from the position, the orientation, and the speed of the vehicle 100 in the local coordinate system for which the camera 340 serves as the reference.

If it is determined in step S420 that the running state is abnormal, the generation unit 316 generates an operation control signal for causing the arm unit 320 to stop in step S435. In step S438, the generation unit 316 generates a running control signal for causing the vehicle 100 to stop and transmits the running control signal to the vehicle 100, and generates a broadcast control signal for causing the broadcasting device 500 to broadcast occurrence of the abnormality and transmits the broadcast control signal to the broadcasting device 500.

After step S430 or step S438, the control unit 317 controls the arm unit 320 according to the operation control signal. The processor 311 repeats this processing at a predetermined cycle.

Similarly to the first embodiment, according to the above-described system 10b according to the present embodiment, even when the running state of the vehicle 100 becomes unstable, the assembly robot 300 can appropriately assemble the part PT to the running vehicle 100. In the present embodiment in particular, the assembly robot 300 can acquire the vehicle operation information using the detection result of the camera 340, and generate by itself the operation control signal for causing the arm unit 320 to operate.

### C. Third Embodiment:

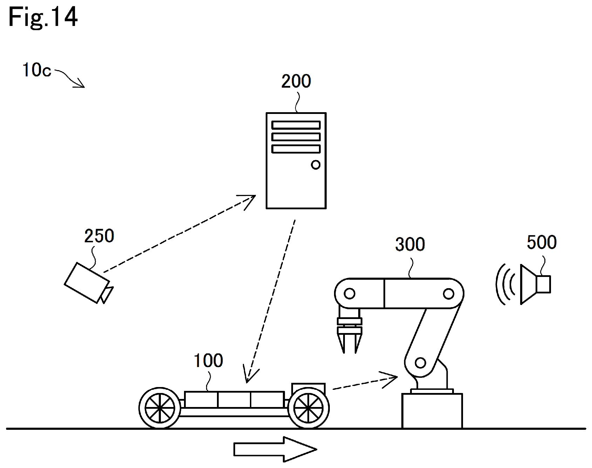

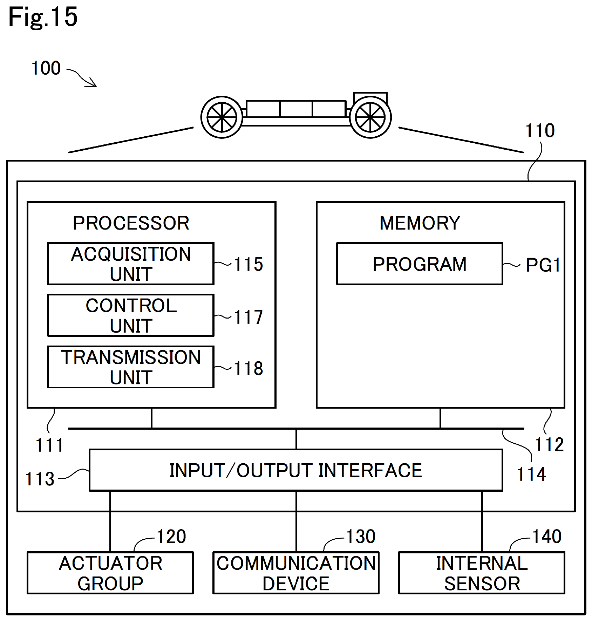

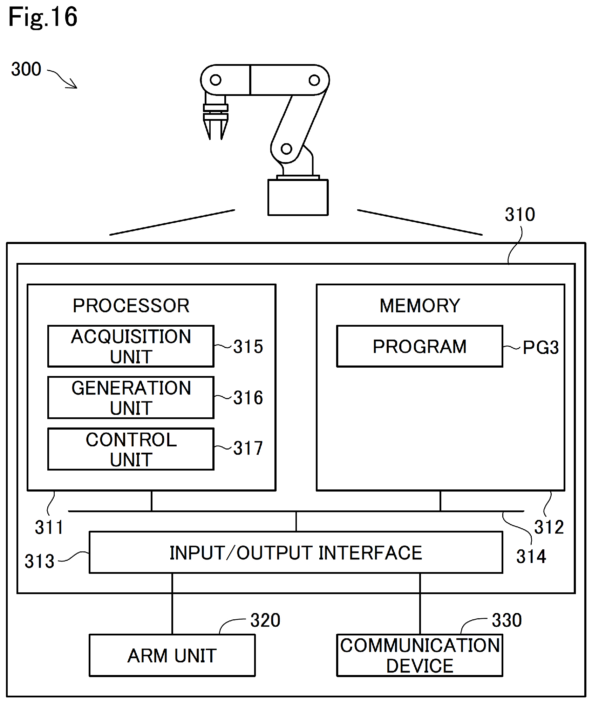

Fig. 14 is an explanatory view illustrating a configuration of a system 10c according to the third embodiment. Fig. 15 is an explanatory view illustrating a configuration of the vehicle 100 according to the third embodiment. Fig. 16 is an explanatory view illustrating a configuration of the assembly robot 300 according to the third embodiment. The present embodiment differs from the second embodiment in that an internal sensor 140 is mounted on the vehicle 100, and the assembly robot 300 generates an operation control signal according to a detection result of the internal sensor 140. The other configurations are the same as those in the second embodiment unless described in particular.

As illustrated in Fig. 15, in the present embodiment, the vehicle 100 includes the at least one internal sensor 140. The internal sensor 140 is mounted on the vehicle 100. The internal sensor 140 detects an operation of the vehicle 100. Examples of the internal sensor 140 include an acceleration sensor that detects the acceleration of the vehicle 100, a speed sensor that detects the speed, a yaw rate sensor that detects a yaw axis angular velocity, a wheel speed sensor that detects a rotation speed of wheels, a steering angle sensor that detects a steering angle, a camera, a LiDAR, a GPS receiver, and the like.

In the present embodiment, the processor 111 functions as the acquisition unit 115 that acquires a running control signal as vehicle control information from the server device 200, the control unit 117 that controls the actuator group 120 according to the running control signal, and a transmission unit 118 that transmits a detection result of the internal sensor 140 to the assembly robot 300 by executing the computer program PG1 stored in advance in the memory 112.

As illustrated in Fig. 16, in the present embodiment, the processor 311 of the assembly robot 300 functions as the acquisition unit 315 that acquires vehicle operation information, the generation unit 316 that generates an operation control signal for causing the arm unit 320 to operate, and the control unit 317 that controls the arm unit 320 by executing the computer program PG3 stored in advance in the memory 312. In the present embodiment, the acquisition unit 315 acquires the detection result of the internal sensor 140 as the vehicle operation information from the vehicle 100.

Similarly to the second embodiment, according to the above-described system 10c according to the present embodiment, even when the running state of the vehicle 100 becomes unstable, the assembly robot 300 can appropriately assemble the part PT to the running vehicle 100. In the present embodiment in particular, the assembly robot 300 can generate by itself the operation control signal for causing the arm unit 320 to operate using the detection result of the internal sensor 140 mounted on the vehicle 100.

### D. Fourth Embodiment:

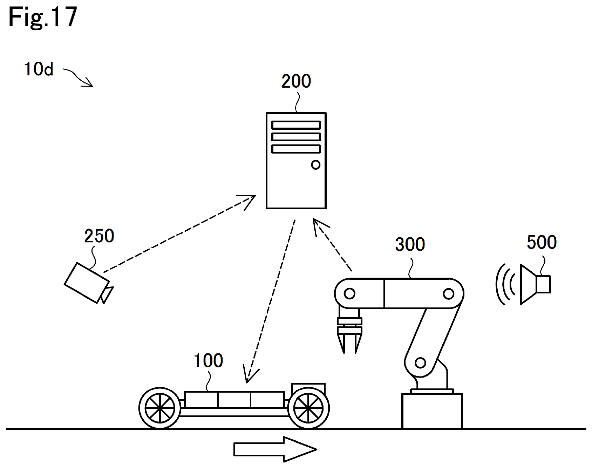

Fig. 17 is an explanatory view illustrating a configuration of a system 10d according to the fourth embodiment. The present embodiment differs from the first embodiment in adjusting the operation of the vehicle 100 in accordance with an operation of the assembly robot 300 instead of adjusting the operation of the assembly robot 300 in accordance with the operation of the vehicle 100. The other configurations are the same as those in the first embodiment unless described in particular.

In the present embodiment, the assembly robot 300 executes an operation taught in advance. Due to, for example, accumulation of errors of the arm unit 320 or a gripping mistake of the part made by the arm unit 320, a position and an orientation of a part at the time of assembly may shift from an ideal position and orientation. In this case, even when the vehicle 100 runs through the ideal route IR at an ideal speed, the assembly robot 300 cannot appropriately assemble a part to the running vehicle 100. The assembly robot 300 transmits to the server device 200 work device operation information related to an operation of the assembly robot 300. The work device operation information includes, for example, a position shift amount, an orientation shift amount, and a speed shift amount of the distal end part of the arm unit 320.

In the present embodiment, in step S110 illustrated in Fig. 6, the acquisition unit 211 of the server device 200 acquires the vehicle position information from the detection results of the external sensors 250, and acquires the work device operation information from the assembly robot 300. In step S120, the generation unit 212 determines a next target location according to the vehicle position information and the work device operation information. The generation unit 212 determines the next target location of the vehicle 100 such that a position shift between a part gripped by the assembly robot 300 and the vehicle 100 is canceled. At this time, the next target location may deviate from the ideal route IR. In step S130, the generation unit 212 generates a running control signal such that position, orientation, and speed shifts between the part gripped by the assembly robot 300 and the vehicle 100 are canceled. Contents after step S130 is the same as that in the first embodiment.

The above-described system 10d according to the present embodiment adjusts the operation of the vehicle 100 such that a shift of the operation of the assembly robot 300 is canceled. Accordingly, even when the operation of the assembly robot 300 becomes unstable, the assembly robot 300 can appropriately assemble the part PT to the running vehicle 100.

### E. Fifth Embodiment:

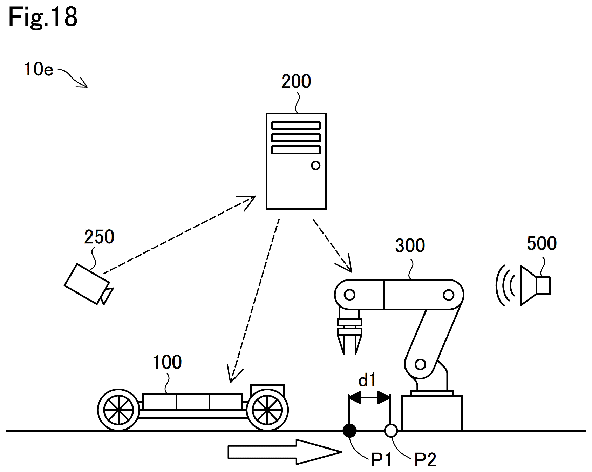

Fig. 18 is an explanatory view illustrating a configuration of a system 10e according to the fifth embodiment. The present embodiment differs from the first embodiment that not the assembly robot 300 assembles a part to the running vehicle 100, but the assembly robot 300 assembles a part to the stopping vehicle 100. The other configurations are the same as those in the first embodiment unless described in particular.

The vehicle 100 moves by unmanned driving to a work place at which the assembly robot 300 performs assembly work, and stops at the work place by unmanned driving. The assembly robot 300 assembles a part to the vehicle 100 that stops at the work place. After the assembly work is ended, the vehicle 100 moves to a next work place by unmanned driving. When, for example, the running state of the vehicle 100 becomes unstable, a target stop position P1 and an actual stop position P2 may shift. In the present embodiment, when the stop position of the vehicle 100 shifts, the operation of the assembly robot 300 is adjusted.

In the present embodiment, the acquisition unit 221 acquires a shift amount d1 of the target stop position P1 and the actual stop position P2 as vehicle operation information. The acquisition unit 211 can acquire the shift amount d1 from, for example, detection results from the external sensors 250. The acquisition unit 211 may acquire the shift amount d1 after the vehicle 100 stops, or may acquire the shift amount d1 by performing prediction before the vehicle 100 stops. By, for example, grasping in advance to what extent braking performance of the vehicle 100 shifts from reference braking performance, it is possible to predict the shift amount d1. The generation unit 222 generates an operation control signal such that the position of the distal end part of the arm unit 320 at the time of assembly is corrected by the shift amount d1, and the transmission unit 223 transmits the operation control signal to the assembly robot 300.

The above-described system 10e according to the present embodiment adjusts the operation of the assembly robot 300 such that a shift of the stop position of the vehicle 100 is canceled. Accordingly, even when the stop position of the assembly robot 300 shifts, the assembly robot 300 can appropriately assemble the part PT to the stopping vehicle 100.

### F. Sixth Embodiment:

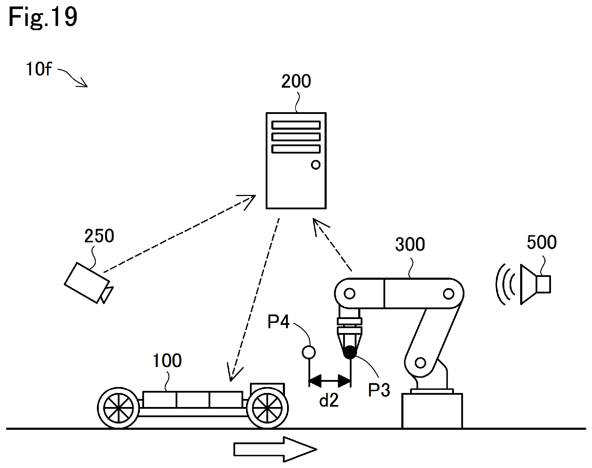

Fig. 19 is an explanatory view illustrating a configuration of a system 10f according to the sixth embodiment. Although adjusting an operation of the vehicle 100 in accordance with an operation of the assembly robot 300 is common between the present embodiment and the fourth embodiment, the present embodiment differs from the fourth embodiment in that not the assembly robot 300 assembles a part to the running vehicle 100, but the assembly robot 300 assembles a part to the stopping vehicle 100. The other configures are the same as those in the fourth embodiment unless described in particular.

The vehicle 100 moves by unmanned driving to a work place at which the assembly robot 300 performs assembly work, and stops at the work place by unmanned driving. The assembly robot 300 assembles a part to the vehicle 100 that is stopping at the work place. After the assembly work is ended, the vehicle 100 moves to a next work place by unmanned driving. When, for example, errors of the operation of the assembly robot 300 accumulate or when a part gripping position of the arm unit 320 shifts, even if the vehicle 100 stops at the target stop position, a target part position P3 at a time of assembly and an actual part position P4 may shift. In the present embodiment, when the operation of the assembly robot 300 shifts, the stop position of the vehicle 100 is adjusted.

The acquisition unit 211 of the server device 200 acquires the vehicle position information related to the position and the orientation of the vehicle 100 from, for example, the detection results of the external sensors 250, and the work device operation information related to the operation of the assembly robot 300. The acquisition unit 211 acquires a shift amount d2 of the target part position P3 at the time of assembly and the actual part position P4 as the work device operation information. The acquisition unit 211 may acquire the shift amount d2 after the arm unit 320 stops at an assembly position, or may acquire the shift amount d2 by performing prediction before the arm unit 320 stops at the assembly position. The generation unit 212 generates a running control signal such that the stop position of the vehicle 100 is corrected by the shift amount d2, and the transmission unit 213 transmits the running control signal to the vehicle 100.

The above-described system 10f according to the present embodiment adjusts the stop position of the vehicle 100 such that a shift of the operation of the assembly robot 300 is canceled. Accordingly, even when the operation of the assembly robot 300 shifts, the assembly robot 300 can appropriately assemble the part PT to the stopping vehicle 100.

### G. Seventh Embodiment:

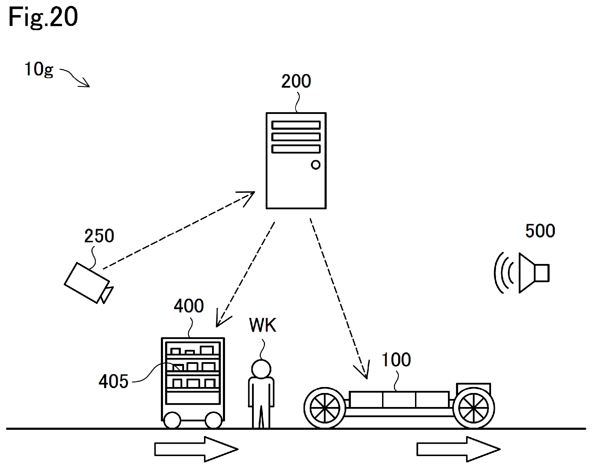

Fig. 20 is an explanatory view illustrating a configuration of a system 10g according to the seventh embodiment. The present embodiment differs from the first embodiment in the system 10g including a wagon 400 instead of the assembly robot 300. The other configurations are the same as those in the first embodiment unless described in particular. Note that the wagon 400 will be also referred to as a work device.

The wagon 400 is disposed on the side of a track on which the vehicle 100 runs. The wagon 400 includes a loading platform 405. Parts to be assembled to the vehicle 100 are loaded in the loading platform 405. A worker WK takes out a part from the loading platform 405 to assemble to the vehicle 100. For example, the worker WK goes back and forth between the wagon 400 and the vehicle 100 to assemble a plurality of parts to the vehicle 100. Note that tools used for work on the vehicle 100 may be loaded in place of parts or together with parts in the loading platform 405. Examples of the tools include power tools for assembling parts to the vehicle 100.

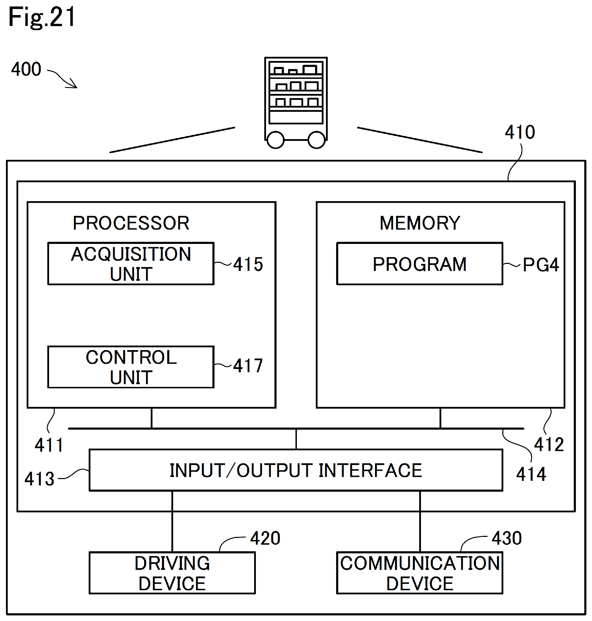

Fig. 21 is an explanatory view illustrating a configuration of the wagon 400. The wagon 400 includes a control device 410, an actuator group 420 that is driven under control of the control device 410, and a communication device 430 for communicating with the server device 200 by wireless communication. In the present embodiment, the actuator group 420 includes an actuator of a driving device for accelerating the wagon 400, an actuator of a steering device for changing a traveling direction of the wagon 400, and an actuator of a braking device for decelerating the wagon 400. The driving device includes a battery, a running motor that drives with electrical power of the battery, and wheels to be rotated by the running motor. The actuator of the driving device includes the running motor. Note that the wagon 400 may not include the steering device or the braking device. Even in this case, the wagon 400 can switch between acceleration and deceleration and between forward movement and backward movement by the running motor.

The control device 410 is composed by a computer that includes a processor 411, a memory 412, an input/output interface 413, and an internal bus 414. The processor 411, the memory 412, and the input/output interface 413 are connected bidirectionally communicably via the internal bus 414. The input/output interface 413 is connected with a communication device 430 for communicating with the server device 200 by wireless communication.

The processor 411 functions as an acquisition unit 415 that acquires work device control information, and a control unit 417 that controls the actuator group 420 by executing a computer program PG4 stored in advance in the memory 412. In the present embodiment, the generation unit 222 of the server device 200 illustrated in Fig. 3 generates an operation control signal for controlling the actuator group 420 as the work device control information, and the transmission unit 223 transmits the operation control signal to the wagon 400. The control unit 417 of the wagon 400 controls the actuator group 420 according to the operation control signal received from the server device 200.

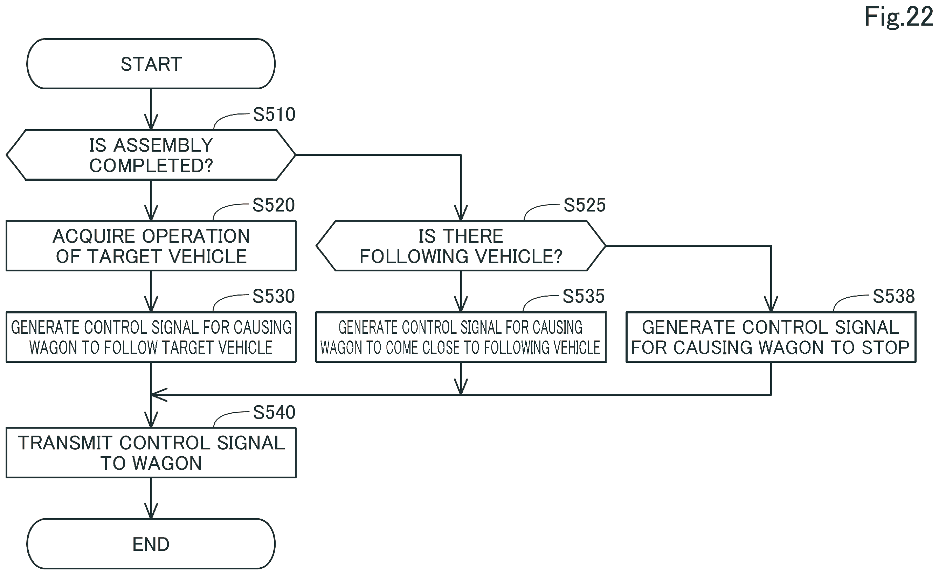

Fig. 22 is a flowchart illustrating a processing procedure of wagon control. This processing is repeatedly executed by the processor 201 of the server device 200. This processing is started when, for example, the manager or the like performs a predetermined start operation on the server device 200. In step S710, the acquisition unit 221 determines whether or not assembly of a part to the work target vehicle 100 has been completed. In the following description, the work target vehicle 100 will be referred to as the target vehicle 100. When receiving a signal transmitted when, for example, the worker WK operates a button installed at the work place, the acquisition unit 221 determines that assembly of a part to the target vehicle 100 has been completed.

If it is not determined in step S510 that assembly of the part to the target vehicle 100 has been completed, the acquisition unit 221 acquires information related to an operation of the target vehicle 100 in step S520. In step S530, the generation unit 222 generates an operation control signal for causing the wagon 400 to follow the target vehicle 100. In the present disclosure, that the wagon 400 follows the target vehicle 100 means that the wagon 400 runs in the same direction as that of the target vehicle 100. That is, that the wagon 400 follows the target vehicle 100 includes not only that the wagon 400 runs behind the target vehicle 100, but also that the wagon 400 runs on the side of the target vehicle 100 or that the wagon 400 runs in front of the target vehicle 100. In the present embodiment, the generation unit 222 generates an operation control signal such that a relative speed of the wagon 400 and the target vehicle 100 falls within a predetermined range. The generation unit 222 preferably generates the operation control signal such that the relative speed of the wagon 400 and the target vehicle 100 is zero.

If it is determined in step S510 that assembly of the part to the target vehicle 100 has been completed, the generation unit 222 determines in step S525 whether or not there is a following vehicle. The generation unit 222 determines whether or not there is a following vehicle by, for example, acquiring information related to a manufacturing plan and a manufacturing record from a process management system of the factory KJ. In a case where, for example, there is a plan to manufacture the 100 vehicles 100 a day, there are following vehicles at a point of time at which assembly of parts to the 50th vehicle 100 is completed on that day, there is no following vehicle after assembly of parts to the 100th vehicle 100 is ended on that day.

If it is determined in step S525 that there is a following vehicle, the generation unit 222 generates a control signal for causing the wagon 400 to come close to the following vehicle stop in step S535. The generation unit 222 generates an operation control signal such that a distance between the wagon 400 and the following vehicle is a predetermined distance or less.

If it is not determined in step S525 that there is a following vehicle, the generation unit 222 generates an operation control signal for causing the wagon 400 to stop in step S538. The generation unit 222 may generate an operation control signal for causing the wagon 400 to stop on the spot, or may generate an operation control signal for causing the wagon 400 to move to a predetermined home position and stop.

In step S540, the transmission unit 223 transmits the operation control signal generated in step S530, step S535, or step S538 to the wagon. The processor 201 repeats the above-described processing until the manager or the like performs a predetermined end operation on the server device 200. The acquisition unit 415 of the wagon 400 receives the operation control signal via the communication device 430, and controls the actuator group 420 according to the operation control signal.

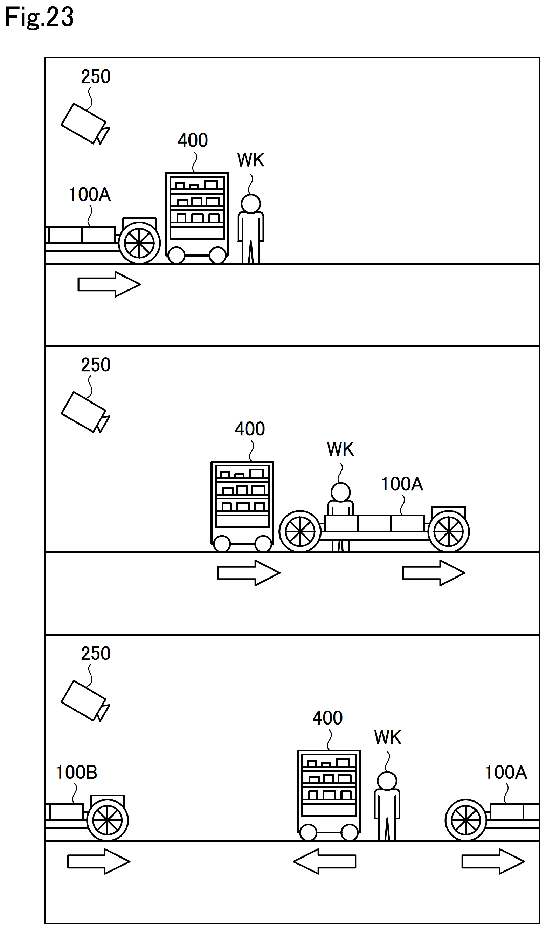

Fig. 23 is an explanatory view illustrating an operation of the wagon 400. As illustrated in an upper stage in Fig. 23, the wagon 400 is stopping at the predetermined home position of the work place in an initial state. As illustrated in a middle stage in Fig. 23, when the target vehicle 100 enters the work place, the wagon 400 follows a target vehicle 100A. The worker WK takes out a part from a loading platform of the wagon 400 to assemble to a target vehicle. Furthermore, the worker WK takes out another part from the loading platform of the wagon 400 to assemble the part to the target vehicle 100A. That is, the worker WK performs part assembly work while going back and forth between the wagon 400 and the target vehicle 100A. As illustrated in a lower stage in Fig. 23, when assembly of the part to the target vehicle 100A is completed, the wagon 400 moves to come close to a following vehicle 100B that enters the work place next. Here, in a case where the wagon 400 does not have a function to autonomously run, a distance between the wagon 400 and the target vehicle 100A becomes long as the target vehicle 100A moves, and therefore work efficiency of the worker WK that assembles to the target vehicle 100A the part taken out from the wagon 400 lowers. Furthermore, although, even in the case where the wagon 400 does not have the function to autonomously run, when the worker WK manually moves the wagon 400, it is possible to suppress the distance between the wagon 400 and the target vehicle 100A from becoming long, labor of the worker WK increases, and therefore the work efficiency of the worker WK lowers. By contrast with this, in the present embodiment, the wagon 400 follows the target vehicle 100A, so that the distance between the wagon 400 and the target vehicle 100A is kept constant while the worker WK performs part assembly work.

According to the above-described system 10g according to the present embodiment, the wagon 400 follows the target vehicle 100, so that it is possible to suppress the distance between the wagon 400 and the target vehicle 100 from becoming long. Accordingly, it is possible to enhance work efficiency of the worker WK that performs work while moving between the wagon 400 and the target vehicle 100A.

Furthermore, in the present embodiment, the wagon 400 is controlled such that the relative speed of the wagon 400 and the target vehicle 100 falls within the predetermined range, so that it is possible to effectively suppress the distance between the wagon 400 and the target vehicle 100 from becoming long.

Furthermore, in the present embodiment, after work on the preceding vehicle 100A is ended, the wagon 400 automatically comes close to the following vehicle 100B, labor of the worker WK for manually brining the wagon 400 close to the following vehicle 100B is not required. Accordingly, it is possible to further enhance work efficiency of the worker WK.

Furthermore, in the present embodiment, while the wagon 400 is moving toward the following vehicle 100B, an operation of the following vehicle 100B is acquired, so that it is possible to acquire the operation of the following vehicle 100B earlier, and make the wagon 400 easily follow the following vehicle 100B.

Furthermore, in the present embodiment, when there is no following vehicle 100B, the wagon 400 automatically stops. Accordingly, it is possible to suppress wasteful consumption of energy caused when the wagon 400 continues moving even though there is no following vehicle 100B.

### H. Eighth Embodiment:

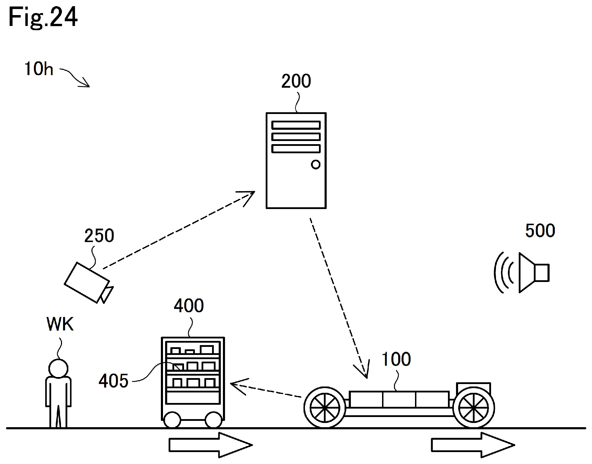

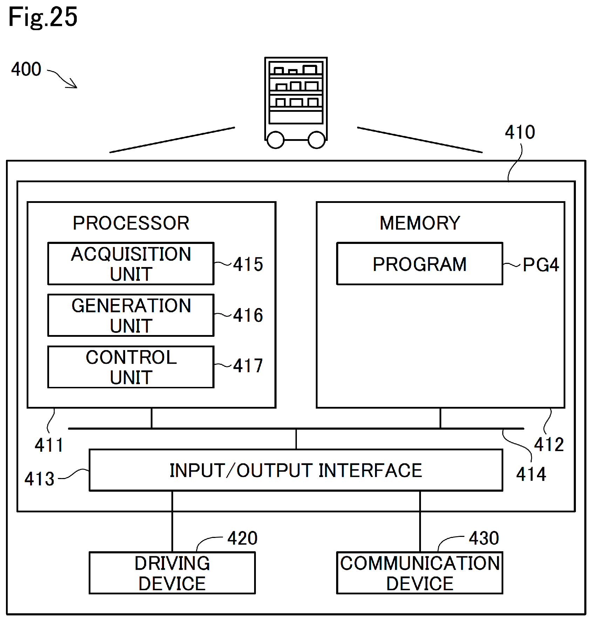

Fig. 24 is an explanatory view illustrating a configuration of a system 10h according to the eighth embodiment. Fig. 25 is an explanatory view illustrating a configuration of the wagon 400 according to the eighth embodiment. The present embodiment differs from the seventh embodiment in that not the wagon 400 runs according to an operation control signal received from the server device 200, but the wagon 400 generates an operation control signal by itself using vehicle operation information acquired from the vehicle 100 and runs. The other configurations are the same as those in the seventh embodiment unless described in particular.

As illustrated in Fig. 25, in the present embodiment, the processor 411 functions as the acquisition unit 415 that acquires vehicle operation information, a generation unit 416 that generates an operation control signal, and the control unit 417 that controls the actuator group 420 by executing the computer program PG4 stored in advance in the memory 412. In the present embodiment, the acquisition unit 415 acquires a running control signal as the vehicle operation information from the vehicle 100. In a case where the internal sensor 140 is provided to the vehicle 100, the acquisition unit 415 may acquire a detection result of the internal sensor 140 from the vehicle 100 and acquire vehicle operation information from the detection result. The generation unit 416 generates an operation control signal according to the vehicle operation information such that the wagon 400 follows the vehicle 100, and the control unit 417 controls the actuator group 420 according to the operation control signal.

Similarly to the seventh embodiment, according to the above-described system 10h according to the present embodiment, the wagon 400 follows the target vehicle 100, so that it is possible to suppress the distance between the wagon 400 and the target vehicle 100 from becoming long. In the present embodiment in particular, it is possible to cause the wagon 400 to follow the vehicle 100 irrespectively of remote control from the server device 200.

### I. Ninth Embodiment:

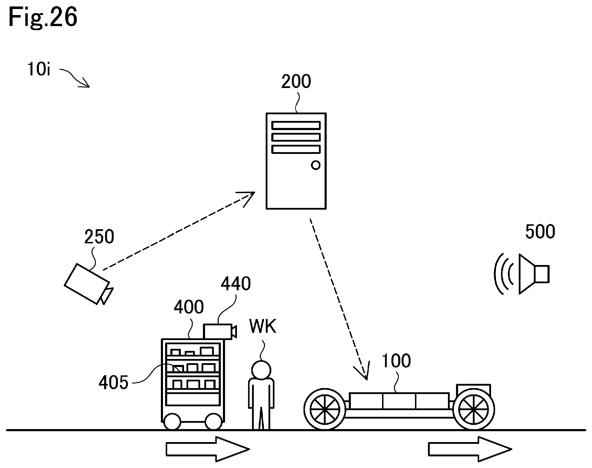

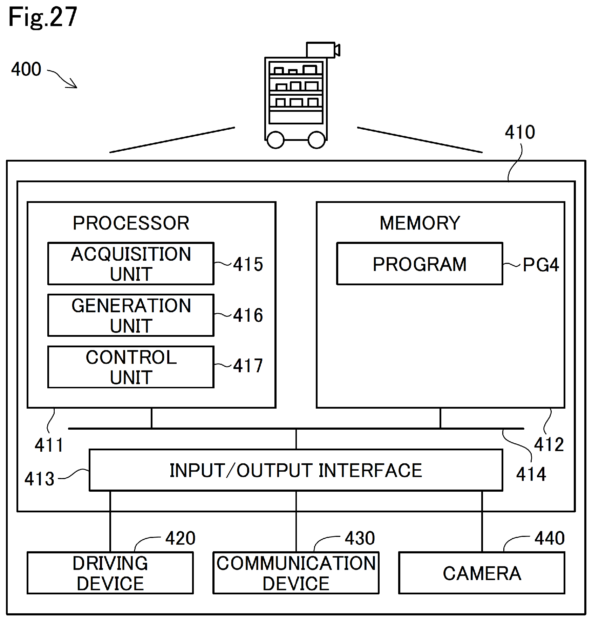

Fig. 26 is an explanatory view illustrating a configuration of a system 10i according to the ninth embodiment. Fig. 27 is an explanatory view illustrating a configuration of the wagon 400 according to the ninth embodiment. The present embodiment differs from the seventh embodiment in mounting a camera 440 on the wagon 400, and determining an operation of the wagon 400 according to a relative position of the wagon 400 and the vehicle 100 acquired by the camera 440. The other configurations are the same as those in the seventh embodiment unless described in particular.

As illustrated in Fig. 27, in the present embodiment, the wagon 400 includes the camera 440. The camera 440 is fixed to a position at which the camera 440 can image the vehicle 100 from the wagon 400. In the present embodiment, the camera 440 is a stereoscopic camera, and can acquire a distance to the vehicle 100 in addition to an operation of the vehicle 100. The camera 440 is connected to an input/output interface of the control device 410. Instead of the camera 440, for example, a LiDAR, a sonar, or the like may be mounted on the wagon 400. Note that the camera 440, the LiDAR, the sonar, and the like for detecting the operation of the vehicle 100 will be referred to as sensors.

In the present embodiment, the processor 411 functions as the acquisition unit 415 that acquires vehicle operation information, the generation unit 416 that generates an operation control signal, and the control unit 417 that controls the actuator group 420 by executing the computer program PG4 stored in advance in the memory 412. In the present embodiment, the acquisition unit 415 acquires a detection result of the camera 440, and acquires vehicle operation information from the detection result. For example, the acquisition unit 415 acquires a distance between the wagon 400 and the target vehicle 100 by analyzing images acquired by the camera 440. The generation unit 416 generates an operation control signal according to the vehicle operation information such that the wagon 400 follows the vehicle 100, and the control unit 417 controls the actuator group 420 according to the operation control signal.

Similarly to the seventh embodiment, according to the above-described system 10i according to the present embodiment, the wagon 400 follows the target vehicle 100, so that it is possible to suppress the distance between the wagon 400 and the target vehicle 100 from becoming long. In the present embodiment in particular, it is possible to cause the wagon 400 to autonomously follow the vehicle 100.

### J. Other Embodiment:

(J1) In each of the above-described embodiments, the server device 200 executes processing of acquisition of position information of the vehicle 100 to generation of a running control signal. By contrast with this, the vehicle 100 may execute at least part of the processing of acquisition of the position information of the vehicle 100 to generation of the running control signal. For example, following aspects (1) to (3) may be adopted.
(1) The server device 200 may acquire position information of the vehicle 100, determine a target location toward which the vehicle 100 needs to travel next, and generate a route from a current position of the vehicle 100 indicated by the acquired position information to the target location. The server device 200 may generate a route to the target location between the current position and a destination, or may generate a route to the destination. The server device 200 may transmit the generated route to the vehicle 100. The vehicle 100 may generate a running control signal such that the vehicle 100 runs on the route received from the server device 200, and control the actuator group 120 using the generated running control signal.
(2) The server device 200 may acquire position information of the vehicle 100, and transmit the acquired position information to the vehicle 100. The vehicle 100 may determine a target location toward which the vehicle 100 needs to travel next, generate a route from a current position of the vehicle 100 indicated by received position information to the target location, generate a running control signal such that the vehicle 100 runs on the generated route, and control the actuator group 120 using the generated running control signal. Note that the vehicle operation information may be a route from the current position of the vehicle 100 to the target location in each of the above-described embodiments.
(3) In above aspects (1) and (2), the internal sensor may be mounted on the vehicle 100, and a detection result to be output from the internal sensor may be used for at least one of generation of the route and generation of the running control signal. Examples of the internal sensor may include a camera, a LiDAR, a millimeter wave radar, an ultrasonic sensor, a GPS sensor, an acceleration sensor, a gyro sensor, and the like. For example, in above aspect (1), the server device 200 may acquire the detection result of the internal sensor, and reflect the detection result of the internal sensor in a route at a time of generation of the route. In above aspect (1), the vehicle 100 may acquire the detection result of the internal sensor, and reflect the detection result of the internal sensor in the running control signal at the time of generation of the running control signal. In above aspect (2), the vehicle 100 may acquire the detection result of the internal sensor, and reflect the detection result of the internal sensor in a route at the time of generation of the route. In above aspect (2), the vehicle 100 may acquire the detection result of the internal sensor, and reflect the detection result of the internal sensor in the running control signal at the time of generation of the running control signal.

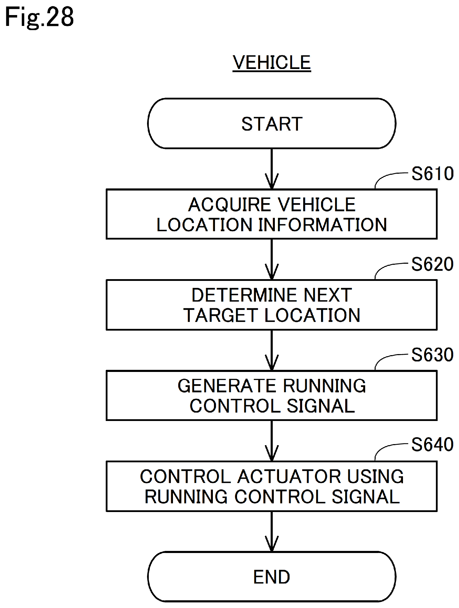

(J2) In each of the above embodiments, the server device 200 may not be provided. In a case where the server device 200 is not provided, exchange of information between the vehicle 100 and the assembly robot 300 via the above-described server device 200, and exchange of information between the vehicle 100 and the assembly robot 300 via the server device 200 may be directly performed without the server device 200. In the case where the server device 200 is not provided, a processing procedure of vehicle control is executed by the processor 111 of the vehicle 100. As illustrated in Fig. 28, in step S610, the processor 111 acquires the position information of the vehicle 100 using the detection results output from the external sensors 250. In step S620, the processor 111 determines a target location toward which the vehicle 100 needs to travel next. In the memory 112, the ideal route IR is stored in advance. In step S630, the processor 111 generates a running control signal for causing the vehicle 100 to run toward the determined target location. In step S640, the processor 111 causes the vehicle 100 to run at an acceleration and a steering angle indicated by the running control signal by controlling the actuator group 120 using the running control signal. The processor 111 repeats acquisition of the position information of the vehicle 100, determination of the target location, generation of the running control signal, and control of the actuator group 120 at a predetermined cycle. By so doing, the vehicle 100 can run not by remote control from the server device 200 but autonomously. Furthermore, the processor 111 of the vehicle 100 may acquire the position information of the vehicle 100 and work device operation information of the assembly robot 300, determine a target location of the vehicle 100 according to the work device operation information, generate a running control signal for causing the vehicle 100 to run toward the determined target location, and control the actuator group 120 according to the running control signal.

(J3) In each of the above-described embodiments, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(J4) In each of the above-described embodiments, the vehicle 100 acquires vehicle location information using detection result from the external sensor 250. By contrast, the vehicle 100 may be equipped with an internal sensor, the vehicle 100 may acquire vehicle location information using detection result from the internal sensor, determine a target location to which the vehicle 100 is to move next, generate a route from a current location of the vehicle 100 indicated by the acquired vehicle location information to the target location, generate a running control signal for running along the generated route, and control the actuator group 120 of the vehicle 100 using the generated running control signal. In this case, the vehicle 100 is capable of running without using any detection result from the external sensor 250. The vehicle 100 may acquire target arrival time or traffic congestion information from outside the vehicle 100 and reflect the target arrival time or traffic congestion information in at least one of the route and the running control signal.

(J5) In each of the above-described embodiments, the server device 200 automatically generates a running control signal to be transmitted to the vehicle 100. By contrast, the server device 200 may generate a running control signal to be transmitted to the vehicle 100 in response to operation by an external operator existing outside the vehicle 100. For example, the external operator may operate an operating device including a display on which a captured image output from the external sensor 250 is displayed, steering, an accelerator pedal, and a brake pedal for operating the vehicle 100 remotely, and a communication device for making communication with the server device 200 through wire communication or wireless communication, for example, and the server device 200 may generate a running control signal responsive to the operation on the operating device.

(J6) In each of the above-described embodiments, instead of adjusting a shift of an operation of the vehicle 100 by an operation of the assembly robot 300, the shift of the operation of the vehicle 100 may be adjusted by the operation of the vehicle 100 and the operation of the assembly robot 300. Furthermore, instead of adjusting a shift of the operation of the assembly robot 300 by the operation of the vehicle 100, the shift of the operation of the assembly robot 300 may be adjusted by the operation of the vehicle 100 and the operation of the assembly robot 300.

(J7) In each of the above-described embodiments, each part may be attached to the vehicle 100 from an arbitrary direction such as an upper side, a lower side, a front side, a rear side, a right side, or a left side of the vehicle 100, may be attached from the same direction, or may be attached from a different direction.

(J8) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(J9) In each of the above-described embodiments, the vehicle 100 is not limited to a passenger car, and may be, for example, trucks, buses, and construction vehicles. The vehicle 100 is not limited to four-wheel vehicles, and may be, for example, two-wheeled vehicles or the like. The vehicle 100 is not limited to forms that run with wheels, and may adopt forms that run with an endless track.

(J10) A configuration for realizing running of the vehicle 100 by unmanned driving is also called a "Remote Control auto Driving system". Conveying the vehicle 100 using Remote Control Auto Driving system is also called "self-running conveyance". Producing the vehicle 100 using self-running conveyance is also called "self-running production". In self-running production, for example, at least part of the conveyance of vehicle 100 is realized by self-running conveyance in the factory KJ where the vehicle is manufactured.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

### REFERENCE SIGNS LIST

10 ... SYSTEM, 100 ... VEHICLE, 110 ... VEHICLE CONTROL DEVICE, 111 ... PROCESSOR, 112 ... MEMORY, 113 ... INPUT/OUTPUT INTERFACE, 114 ... INTERNAL BUS, 115 ... ACQUISITION UNIT, 117 ... CONTROL UNIT, 118 ... TRANSMISSION UNIT, 120 ... ACTUATOR GROUP, 130 ... COMMUNICATION DEVICE, 140 ... INTERNAL SENSOR, 200 ... SERVER DEVICE, 201 ... PROCESSOR, 202 ... MEMORY, 203 ... INPUT/OUTPUT INTERFACE, 204 ... INTERNAL BUS, 205 ... COMMUNICATION DEVICE, 211 ... ACQUISITION UNIT, 212 ... GENERATION UNIT, 213 ... TRANSMISSION UNIT, 221 ... ACQUISITION UNIT, 222 ... GENERATION UNIT, 223 ... TRANSMISSION UNIT, 250 ... EXTERNAL SENSOR, 300 ... ASSEMBLY ROBOT, 310 ... CONTROL DEVICE, 311 ... PROCESSOR, 312 ... MEMORY, 313 ... INPUT/OUTPUT INTERFACE, 314 ... INTERNAL BUS, 315 ... ACQUISITION UNIT, 316 ... GENERATION UNIT, 317... CONTROL UNIT, 320 ... ARM UNIT, 330 ... COMMUNICATION DEVICE, 340 ... CAMERA, 400 ... WAGON, 405 ... LOADING PLATFORM, 410 ... CONTROL DEVICE, 411 ... PROCESSOR, 412 ... MEMORY, 413 ... INPUT/OUTPUT INTERFACE, 414 ... INTERNAL BUS, 415 ... ACQUISITION UNIT, 416 ... GENERATION UNIT, 417... CONTROL UNIT, 420 ... ACTUATOR GROUP, 430 ... COMMUNICATION DEVICE, 440 ... CAMERA, 500 ... BROADCASTING DEVICE

## Claims

1. A system comprising:
a work device used for work on a vehicle under manufacture being capable of running by unmanned driving;
an acquisition unit configured to acquire an operation information related to an operation of the vehicle running by the unmanned driving to a work place where the work device is disposed; and
a control unit configured to control the work device according to the operation information.

2. A device comprising:
an acquisition unit configured to acquire an operation information related to an operation of a vehicle running by unmanned driving and being manufactured;
a generation unit configured to generate a work device control information according to the operation information, the work device control information being used to control a work device assembling a part to the vehicle that is running; and
a transmission unit configured to transmit the work device control information to the work device.

3. The device according to claim 2, wherein
the work device includes an arm unit configured to grip the part, and a control unit configured to control the arm unit,
the generation unit is configured to generate the work device control information including a parameter used to control the arm unit, and
the control unit is configured to control the arm unit using the parameter.

4. The device according to claim 2, wherein the generation unit is configured to generate a vehicle control information used to control the vehicle.

5. The device according to claim 2, wherein, if an operation of the vehicle satisfies a predetermined condition, the generation unit is configured to generate at least one of a command to cause the vehicle to stop, a command to cause the work device to stop, and a command to broadcast of abnormality occurrence.

6. The device according to claim 2, wherein
the work device includes a sensor configured to detect the operation of the vehicle, and
the acquisition unit is configured to acquire the operation information using the sensor.

7. The device according to claim 2, wherein
the vehicle includes a sensor configured to detect the operation of the vehicle, and
the acquisition unit is configured to acquire the operation information using the sensor.

8. The device according to claim 4, wherein
the device is located outside the vehicle, and
the transmission unit is configured to transmit the vehicle control information to the vehicle.

9. The device according to claim 4, wherein the generation unit is configured to generate the vehicle control information for controlling the vehicle such that a relative speed of the vehicle and the part at a time when the work device assembles the part to the vehicle falls within a predetermined range.

10. The device according to claim 9, wherein, if the relative speed of the vehicle and the part at the time when the part is assembled to the vehicle is not within the predetermined range, the generation unit is configured to generate at least one of a command to cause the vehicle to stop, a command to cause the work device to stop, and a command to broadcast of an abnormality occurrence.
